Europäisches Patentamt

European Patent Office

Office européen des brevets

(11) Publication number: **0 274 878 B1**

# EUROPEAN PATENT SPECIFICATION

(45) Date of publication of patent specification: **22.07.92** (51) Int. Cl.⁵: **G02B 6/10**

(21) Application number: **87311067.0**

(22) Date of filing: **16.12.87**

(54) **Circularly birefringent dielectric waveguides.**

(30) Priority: **16.12.86 IT 4163886**

(43) Date of publication of application:
**20.07.88 Bulletin 88/29**

(45) Publication of the grant of the patent:
**22.07.92 Bulletin 92/30**

(84) Designated Contracting States:
**BE CH DE ES FR GB IT LI NL SE**

(56) References cited:
**EP-A- 0 210 806**
**US-A- 4 106 847**

**IEE PROCEEDINGS, vol. 133, no. 4, part J, August 1986, pages 249-255, Stevenage, GB; Y. FUJII et al.: "Design considerations for circularly form-birefringent optical fibres"**

**PATENT ABSTRACTS OF JAPAN, vol. 6, no. 92 (P-119)[970], 29th May 1982; & JP - A - 57 26810**

**ELECTRONICS LETTERS, vol. 22, no. 3, January 1986, pages 129-130, Stevenage, GB; C.D. HUSSEY et al.: "Circularly birefringent single-mode optical fibres"**

(73) Proprietor: **PIRELLI GENERAL plc**
**40 Chancery Lane**
**London WC2A 1JH(GB)**

(72) Inventor: **Someda, Carlo Giacomo**
**No. 25 Via Facciolati**
**Padua(IT)**

(74) Representative: **Abbie, Andrew Kenneth et al**
**R.G.C. Jenkins & Co. 26 Caxton Street**
**London SW1H 0RJ(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

**Description**

In recent years there has been a rapid increase in interest with regard to ultra-low attenuation waveguides (or optical fibres, as they may be called) of vitreous silica, which are characterised by a markedly and deliberately anisotropic optical behaviour, the said interest focusing on the guides known as single transmission mode guides (or mono-modal or unimodal guides), which are in reality characterised by the face of being able to guide radiation in two different states of polarisation which, as a very general rule and strictly speaking, are elliptical.

Two extreme cases are of particular importance for the purposes of application that in which the said polarisation ellipses are the resultant of two orthogonal linear polarisation states, and that in which the said ellipses are the resultant of two circular polarisation states having opposite rotations. These are then referred to, respectively, as linearly birefringent guides and circularly birefringent guides.

The circularly birefringent optical guides are currently used principally in sensors and transducers of physical quantities, and are particularly suitable for the construction of instruments for measuring static or slowly variable magnetic fields. But it is not difficult to arrange for their use also in the production of components to be used at the ends, or in specific sections, of telecommunications systems which utilise as means of transmission isotropic or rectilinear birefringement optical fibres.

Both in this case and in the field of sensors and transducers, it is of great importance that it should be possible to link isotropic guides and circularly birefringent guides, in the sense that the power lost by radiation and reflection at the joint between different fibres must be very small.

The problems associated with the industrial production of circularly birefringent guides derive essentially from the impossibility of modifying, in the desirable sense, the chemical or physical properties, on the microscopic scale, of the vitreous silica. The result is that the techniques by means of which circularly birefringent guides have been obtained entail properties only on the macroscopic scale, that is to say over distances appreciably greater than the wavelength of the guided light.

These mechanical operations can substantially be reduced to the two following steps:

- a structure is produced which, unlike an isotropic optical guide, does not possess symmetry of revolution about a longitudinal axis which will be referred to below as the axis z;
- the above-mentioned structure is subjected to torsion about the axis z and/or is helically wound on a cylinder.

Some disadvantages of the circular birefringent optical guides produced hitherto have been overcome by the invention disclosed in our earlier EP-A-0210806, which was published after the priority date of the present application.

In addition to EP-A-0210806 attention is directed to an article entitled 'Design considerations for circularly form-birefringent optical fibres' in IEE Procedings, vol. 133, no. 4 which was published after the filing date of EP-A-0210806 but before the priority date of the present application, and which discloses a circularly birefringent dielectric waveguide the cross-section of which comprises a central circular zone having a constant, or substantially constant refractive index n1 in the radial direction; an outer zone having a refractive index n2; and an intermediate region divided into eight, or multiples of eight, angular sections, wherein said angular sections extend helically about the central circular zone of waveguide along the length thereof, respective alternate sections having refractive indices n3 and n4, n3 being constant, or substantially constant in the radial direction.

In order that the present invention may be well understood, reference will now be made to the accompanying drawings, in which:

Figures 1a and 1b are cross-section of waveguides known prior to EP-A-0210806;

Figure 2 is a cross-section of a waveguide disclosed in EP-A-0210806; and

Figure 3 is a cross-section of an exemplary embodiment of the present invention.

The waveguides produced prior to the invention of EP-A-0210806 may be classified in two categories:

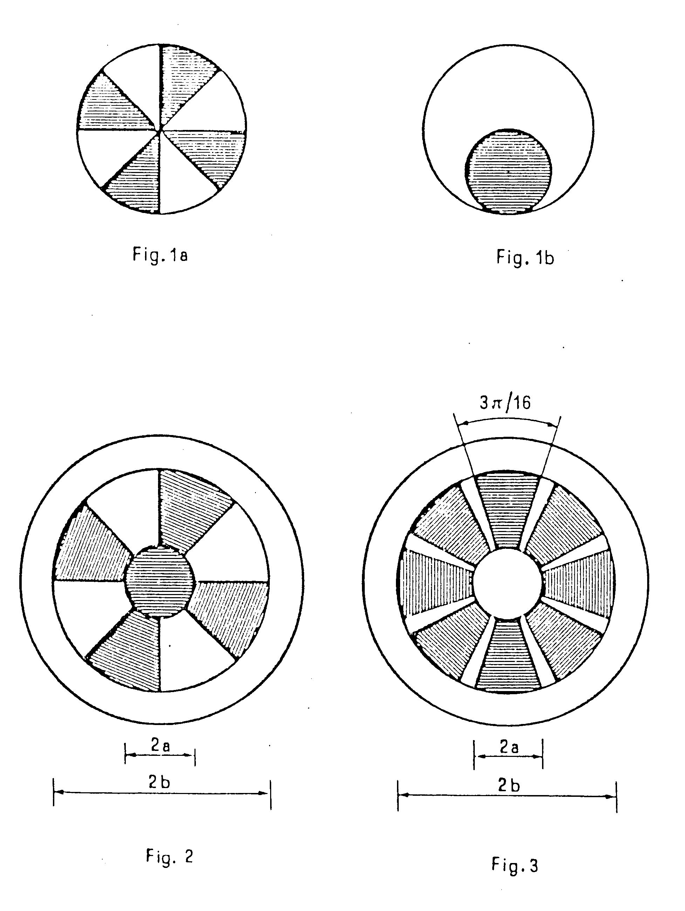

a) Guides such as shown in Figure 1a in which the cross-section (of the entire guide or one part thereof) is divided into m angular sectors (where m is conventionally eight or a multiple of eight, to avoid super-position of linear birefringence on the circular birefringence), which guides alternately have refractive indices n1 and n2, where n1>n2. Neither n1 nor n2, in this type of guide, can be deliberately varied from point to point. The guide is subjected to torsion about the axis in which the sectors in question merge; and

b) Guides such as shown in Figure 1b in which the cross-section of the core is electrically homogeneous, and in which the said core is then helically wound about an axis other than the axis of symmetry of the said core.

In guides of type a, the guided electromagnetic energy is distributed in the cross-section in a manner very different to that encountered in a cylindrical isotropic monomodal optical guide. As a result, the injection and extraction of the light at the two ends of a length of guide of type a, by direct connection to an isotropic monomodal guide, are accompanied by severe losses.

This disadvantage is not present in the guides of type b, but this is achieved at the price of a substantial reduction in the maximum circular birefringence compatible with the maximum torsion at which the fibre is still capable of guiding the light. In fact, if the pitch of the helical winding falls below a certain minimum, an optical fibre radiates as well as guiding.

As a result, for equivalent overall external performance, a device of type b requires a guide length which is a much greater than that of the similar device of type a; the result is an increase in those losses associated with the distance travelled by the radiation.

The two disadvantages just described are mutually exclusive, bit the state of the art which existed prior to the invention of EP-A-0210806 made it necessary to select one or other of the said disadvantages, with no possibility of compromise. The invention of EP-A-0210806 has, however, made it possible to 'offset' the two disadvantages against each other, to a controlled extent, in a manner such as to make it possible to compromise the two disadvantages, to a controlled extent, in a manner such as to make it possible to optimise the performance of each guide relative to nominal characteristics.

The embodiment in EP-A-0210806 shown in Figure 2 comprises an optical guide in which the refractive index, in cross-section, has the distribution described above. The said guide is subjected to torsion (for example, to the action of spinning from a preform) about the axis of symmetry of its cross-section, which is constituted as follows:-

- there is a circular central region, of external radius a, in which the refractive index is constant (or approximately constant), this is indicated by $n1$;
- there is an outer region, defined internally by a circumference of radius b, in which the refractive index is constant; this is indicated by $n2$;
- there is an intermediate region lying between the central region and the outer region which is subdivided into m angular sections (m = 8 or a multiple of 8, for the reasons already explained above);
- the angular sections in even positions (starting from a suitable angular reference point) have constant refractive indices $n3$ (which may coincide with $n2$);
- the angular sections in odd positions have refractive indices $n4$ which decrease gradually as the associated radius r increases, from the value $n1$ (or from a value slightly inferior thereto) for $r = a$ to the value $n2$ (or slightly inferior thereto) for $r = b$; the said index $n4$ varies in inverse proportion to the square of the distance from the axis of the waveguide;
- the angular width of the even (or odd) sections is a design parameter of the structure.

Referring, for the sake of simplicity, to the case where m = 8, and using shading to represent the refractive index (nmax = dark, nmin = white), what has just been said is shown in the diagram of Fig. 2, in which the cross-section of the guide has a shape which may be described as that of a 'military cross'.

The military cross waveguide field can be coupled to that of injecting and emitting isotropic guides, thus minimising the losses at the terminal connections of the circularly birefringent guide.

The design parameters, as indicated in EP-A-021806 are:

- the indices $n1$, $n2$, $n3$;
- the radii a, b;
- the constant of proportionaly h between $n4$ and $r^{-2}$;
- the angular width of the odd sections.

To modify the said parameters means altering the compromise between reducing coupling losses (and hence the losses at the ends of the anisotropic guide) and obtaining maximum circular birefringence (and hence the whole of the losses distributed along the said guide).

In EP-A-0210806 it was further indicated that, if necessary, the parameters of the cross-section (refractive indices and/or geometric dimensions) may vary gradually along the longitudinal axis, for example in order to obtain an initial zone of optimum coupling followed by another zone of higher circular birefringence. It was, however, indicated that this is technologically more difficult, given the present state of the art.

Within the great range of possibilities covered, some choices are preferable to others in that they solve problems of electromagnet propagation and/or technological problems in a more satisfactory manner.

The present invention provides a circularly birefringent dielectric waveguide the cross-section of which comprises a central circular zone having a constant, or substantially constant refractive index $n1$ in the radial direction; an outer zone having a refractive index $n2$; and an intermediate region divided into eight, or multiples of eight, angular sections wherein said angular sections extend helically about the central circular zone of waveguide along the length thereof, respective alternate sections having refractive indices $n3$ and $n4$, $n3$ being constant, or substantially constant in the radial direction characterised in that $n4$ varies in the radial direction substantially in inverse proportion to the square of the radial distance from the axis of the waveguide, wherein n4 is not less than n3 and not less than n2, and wherein n1 is less than the maximum value of n4 throughout the length of the said waveguide or in a portion intermediate the ends thereof.

The invention also provides a circularly birefringent waveguide comprising three waveguide lengths connected in cascade in the longitudinal direction of propagation with or without a break in continuity, the three waveguide lengths each being formed in accordance with the preceding paragraph.

A problem of substantial importance solved by the exemplary embodiment of the present invention shown in Figure 3 is the individualisation of the design parameter to simultaneously possess two properties:

- it substantially modifies the compromise between coupling losses and degree of circular birefringence, of which in fact little was said in EP-A-0210806
- it is easy to control from the technological standpoint.

The refractive index of the circular region at the centre of the military cross, indicated by n1, is ideally suited to these two requirements. In fact, assuming of course that all the other parameters remain equal:

- if n1 increases, the guided electromagnetic field of the structure in question is directed towards the axis z of the guide, and tends increasingly to resemble the field of an isotropic guide; the losses at the connection between he two guides are thus reduced;
- if n1 decreases, the field penetrates more deeply into the regions having the variable refractive index n4; this is accompanied by an increase in the circular birefringence.

In particular, a considerably accentuated birefringence is optained by allowing n1 to fall below the maximum value of n4 (which pertains for r = a) and, if necessary, event below the value n3.

Another feature of the embodiment consists, in a particularly simple manner, in obtaining gradual transition from a guide of optimum coupling to a guide of high circular birefringence.

The feature which produces the transition in question, and which well be understood if further reference is made to what was said in relation to the refractive index of the internal core, consists in gradually varying n1 along the axis of the guide from maximum values at each end for connection to the respective isotropic guides to a minimum value intermediate its ends for high circular birefringence. The change in n1 is sufficiently gradual to give rise to an 'adiabatic' change in the guided field.

As for the technology, in order to describe it briefly, it will be taken as understood that an 'ordinary' military cross guide, that is to say with n1 constant, can be produced by a process of the type familiarly known as 'rod in tube'. That is to say a process which begins with a preform produced by juxtaposition of various cylinders (not necessarily exactly circular) of various glasses, within a tube which is likewise of glass; the whole of which is then intended to collapse in the act of the spinning of the fibre.

To obtain a 'military cross' guide where n1 is variable in the longitudinal direction, a cylindrical glass bar, or rod, it produced having an index which is variable longitudinally, which bar is positioned at the centre of the preform of the type described above. The bar in question can be obtained by the technique familiarly known as "VAD" (vapour-phase axial deposition), that is to say by that process of chemical disposition from the vapour phase in which synthetic silica forms at the outlet from a suitable burner and is deposited on a 'seed' which is gradually moved away from the burner. The introduction into the chemical reaction of a suitable doping agent, in doses which can be slowly varied over time, makes it possible to obtain the desired variation in the refractive index, which is transformed into the desired variation of n1 in the guide during spinning.

Another aspect of the embodiment relates to the number m of the angular sections in the intermediate region and their angular width. While EP-A-0210806 indicates generically that the values selected for m and the angular extent of the sections influence the circular birefringence, it provides no details on how to obtain high circular birefringence simultaneously with wide margins of geometric tolerance, particularly as relates to the angles of the various sections.

By means of mathmatical expansion and technological observations it has been found that the value to be preferred for m is not 8 (the minimum for correct operation for the circular birefringent guide), but a multiple thereof. Moreover, the circular birefringence increases substantially when the sections of variable index n4 have an angular extent greater than those of constant index n3. A selection of the type where m = 16, the angle at the centre of the sectors of variable index is substantially equal to (3 $\pi$/16 radians, the angle at the centre of the sectors of constant index is equal to $\pi$/16, satisfies the above requirements better than the fibre with 8 sectors of angular extent $\pi$/4. The 16-sector shown diagrammatically in Fig. 3 is quite different, on appearance, for the 'military cross' of Fig. 2, although it is nothing but a more precise individualisation of a case generically covered in EP-A-0210806. An appropriate name for the new structure is 'windmilltype".

A typical example of the dimensioning of a windmill-type guide intended to function at a wavelength of 633 nm: primary radius a = 2 $\mu$m; secondary radius b = 8 $\mu$m; n1 is equal to that of an isotropic monomodal fibre (for example 1.457); n2 = n3 = n1$^{0.998}$; n4 is equal to n2 at r = b. Number of sections: m = 16; angular aperture of the sections of variable index: (3$\pi$)/16 radians.

## Claims

1. A circularly birefringent dielectric waveguide the cross-section of which comprises a central circular zone having a constant, or substantially constant refractive index n1 in the radial direction, an outer zone having a refractive index n2, and an intermediate region divided into eight, or multiples of eight, angular sections, wherein said angular sections extend helically about the central circular zone of waveguide along the length thereof respective alternate sections having refractive indices n3 and n4, n3 being constant, or substantially constant in the radial direction, characterised in that n4 varies in the radial direction substantially in inverse proportion to the square of the radial distance from the axis of the waveguide, wherein n4 is not less than n3 and not less than n2, and wherein n1 is less than the maximum value of n4 throughout the length of the said waveguide or in a portion intermediate the ends thereof.

2. A waveguide as claimed in claim 1, wherein said intermediate region is divided into sixteen angular sections.

3. A waveguide as claimed in claim 2, wherein the respective angular extents of the angular sections having refractive index n4 are equal.

4. A waveguide as claimed in claim 2 or 3, wherein the angular extent of each of the angular sections having refractive index n4 is greater than the angular extent of each of the other angular sections.

5. A waveguide as claimed in claim 4, wherein the angular extent of each said angular section having refractive index n4 is substantially three times greater than the angular extent of each said other angular section.

6. A waveguide as claimed in any one of claims 1 to 5, wherein n1 is constant, or substantially constant in the axial direction.

7. A waveguide as claimed in any one of claims 1 to 5, wherein n1 varies progressively in the axial direction of the waveguide from maximum values at each end to a minimum value intermediate said ends.

8. A waveguide as claimed in any one of the preceding claims, wherein n1 is less than n3 throughout the length of the waveguide or in a portion intermediate the end portions thereof.

9. A circularly birefringent waveguide comprising three waveguide lengths connected in cascade in the longitudinal direction of propagation with or without a break in continuity, the three waveguide lengths each being formed in accordance with claim 1.

## Revendications

1. Guide d'ondes diélectrique à biréfringence circulaire, dont la section transversale comprend une zone centrale circulaire possédant un indice de réfraction n1 constant ou sensiblement constant dans la direction radiale; une zone extérieure possédant un indice de réfraction n2; et une région intermédiaire subdivisée en huit ou en des multiples de huit sections angulaires, et dans lequel lesdites sections angulaires s'étendent en hélice autour de la zone circulaire centrale du guide d'ondes, sur son étendue en longueur, des sections alternées respectives possédant des indices de réfraction n3 et n4, n3 étant constant ou sensiblement constant dans la direction radiale, caractérisé en ce que n4 varie dans la direction radiale d'une manière sensiblement inversement proportionnelle au carré de la distance radiale à partir de l'axe du guide d'ondes, n4 n'étant pas inférieur à n3 ni à n2, et n1 étant inférieur à la valeur maximale de n4 sur toute la longueur dudit guide d'ondes ou dans une partie située entre les extrémités du guide d'ondes.

2. Guide d'ondes selon la revendication 1, dans lequel ladite région intermédiaire est subdivisée en seize sections angulaires.

3. Guide d'ondes selon la revendication 2, dans lequel les étendues angulaires respectives des sections angulaires possédant l'indice de réfraction n4 sont identiques.

4. Guide d'ondes selon la revendication 2 ou 3, dans lequel l'étendue angulaire de chacune des sections angulaires possédant l'indice de réfraction n4 est supérieure à l'étendue angulaire de chacune des autres sections angulaires.

5. Guide d'ondes selon la revendication 4, dans lequel l'étendue angulaire de chacune desdites sections angulaires possédant l'indice de réfraction n4 est sensiblement égale au triple de l'étendue angulaire de chacune desdites autres sections angulaires.

6. Guide d'ondes selon l'une quelconque des revendications 1 à 5, dans lequel n1 est constant ou sensiblement constant dans la direction axiale.

7. Guide d'ondes selon la revendication 1 à 5, dans lequel n1 varie progressivement dans la direction axiale du guide d'ondes depuis des valeurs maximales à chaque extrémité jusqu'à une valeur minimale entre lesdites extrémités.

8. Guide d'ondes selon l'une quelconque des revendications précédentes, dans lequel n1 est inférieur à n3 sur toute la longueur du guide d'ondes ou dans une partie située entre les parties d'extrémité du guide d'ondes.

9. Guide d'ondes à biréfringence circulaire comprenant trois longueurs de guides d'ondes raccordées en cascade dans la direction longitudinale de propagation avec ou sans interruption de continuité, les trois longueurs de guides d'ondes étant formées chacune conformément à la revendication 1.

**Patentansprüche**

1. Zirkulardoppelbrechender dielektrischer Wellenleiter, dessen Querschnitt eine zentrale kreisförmige Zone mit einem konstanten oder im wesentlichen konstanten Brechungsindex n1 in der radialen Richtung, eine äußere Zone mit einem Brechungsindex n2 und einen mittleren Bereich aufweist, der in acht oder ein Mehrfaches von acht Winkelsektionen aufgeteilt ist, wobei die Winkelsektionen schraubenförmig um die zentrale kreisförmige Zone des Wellenleiters entlang dessen Länge verlaufen, wobei jeweils abwechselnde Sektionen Brechungsindizes n3 und n4 besitzen, wobei n3 konstant oder im wesentlichen konstant in der radialen Richtung ist, dadurch gekennzeichnet, daß n4 sich in der radialen Richtung im wesentlichen invers proportional zum Quadrat der radialen Entfernung von der Achse des Wellenleiters verändert, wobei n4 nicht kleiner als n3 und nicht kleiner als n2 ist und wobei n2 kleiner als der Maximalwert von n4 über die gesamte Länge des Wellenleiters oder in einem Abschnitt zwischen dessen Enden ist.

2. Wellenleiter nach Anspruch 2, bei welchem der zentrale Bereich in 16 Winkelsektionen geteilt ist.

3. Wellenleiter nach Anspruch 2, bei welchem die jeweiligen Winkelmaße der Winkelsektionen mit einem Brechungsindex n4 gleich sind.

4. Wellenleiter nach Anspruch 2 oder 3, bei welchem das Winkelmaß jedes der Winkelsektionen mit einem Brechungsindex n4 größer als das Winkelmaß von jeder der anderen Winkelsektionen ist.

5. Wellenleiter nach Anspruch 4, bei welchem das Winkelmaß jeder Winkelsektion mit einem Brechungsindex n4 im wesentlich um das Dreifache größer als das Winkelmaß jeder anderen Winkelsektion ist.

6. Wellenleiter nach einem der Ansprüche 1 bis 5, bei welchem n1 konstant oder im wesentlichen konstant in der axialen Richtung ist.

7. Wellenleiter nach einem der Ansprüche 1 bis 5, bei welchem n1 sich fortlaufend in der axialen Richtung des Wellenleiters von den Maximalwerten an jedem Ende zu einem Minimalwert zwischen den Enden verändert.

8. Wellenleiter nach einem der vorangegangenen Ansprüche, bei welchem n1 kleiner als n3 über die Länge des Wellenleiters oder in einem Abschnitt zwischen dessen Endabschnitten ist.

9. Zirkulardoppelbrechender Lichtwellenleiter mit drei Wellenleiter-Längen, die in Kaskade in der Längsrichtung der Fortpflanzung mit oder ohne Unterbrechung in der Kontinuität miteinander verbunden sind, wobei die drei Wellenleiter-Längen jeweils nach Anspruch 1 ausgebildet sind.

Fig. 1a

Fig. 1b

Fig. 2

Fig. 3